# EUROPÄISCHE PATENTSCHRIFT

(11) **EP 3 025 207 B1**
(45) Veröffentlichungstag und Bekanntmachung des Hinweises auf die Patenterteilung: **19.04.2017**
(21) Anmeldenummer: 14766889.1
(22) Anmeldetag: 01.07.2014
(51) Int. Cl.: F16K 1/44, F16K 1/52, F24D 19/10, G05D 7/01

(54) **DURCHFLUSSREGELVENTIL**
FLOW REGULATING VALVE
VANNE DE RÉGULATION DU DÉBIT DE FLUIDE

(30) Priorität: 22.07.2013 DE 102013107762; 07.03.2014 DE 102014103051; 04.04.2014 DE 102014004907; 04.04.2014 DE 102014004910
(43) Veröffentlichungstag der Anmeldung: 01.06.2016
(60) Teilanmeldung: 16171000.9
(73) Patentinhaber: Oventrop GmbH & Co. KG, 59939 Olsberg (DE)
(72) Erfinder: LÖFFLER, Gerhard, 59939 Olsberg (DE)
(74) Vertreter: Köchling, Conrad-Joachim
(86) Internationale Anmeldenummer: PCT/DE2014/100223
(87) Internationale Veröffentlichungsnummer: WO 2015/010685

(56) Entgegenhaltungen:
- EP-A1- 0 911 714
- EP-A1- 2 615 342
- EP-A2- 0 751 448
- DE-A1-102007 013 505
- DE-A1-102009 011 506
- DE-A1-102011 107 273

## Beschreibung

Die Erfindung betrifft ein Durchflussregelventil für flüssigkeitsführende Heizungs- oder Kühlanlagen, bestehend aus einem Gehäuse mit mindestens einem Einlass und mindestens einem Auslass und einem dazwischen angeordneten Anschlussstutzen, in den eine Druckregeleinrichtung, welche die Druckdifferenz zwischen den Druckbereichen vor und hinter einer im Anschlussstutzen angeordneten Durchflussreguliereinheit konstant hält, sowie eine Spindel mit aus dem Gehäuse ragendem Betätigungsteil und im Gehäuse befindlichen ersten Drosselkörper eingesetzt ist, der auf die Durchflussreguliereinheit oder auf Teile davon einwirkt, wobei die Durchflussreguliereinheit aus einer ersten Drosseleinrichtung, die aus dem an der Spindel befestigten ersten Drosselkörper und einem Sitz gebildet ist, und einer zweiten Drosseleinrichtung, die aus einem auf der Spindel längs dieser verstellbar angeordneten zweiten Drosselkörper und einem Sitz gebildet ist, besteht, wobei der zweite Drosselkörper in Richtung auf den ersten Drosselkörper und von diesem weg beweglich ist, wodurch der Querschnitt des Strömungskanals durch das Durchflussregelventil veränderbar ist.

Insbesondere betrifft die Erfindung ein dynamisch arbeitendes Durchflussregelventil, mittels dessen der Durchfluss derart geregelt wird, dass dieser unabhängig vom Differenzdruck über das gesamte Ventil konstant bleibt.

Beispielsweise ist aus der PCT/DE 2008/000669 eine Armaturenkombination zur Regelung der Durchflussmenge und/oder des Differenzdruckes in flüssigkeitsführenden Heizungs- oder Kühlanlagen bekannt, bei der in Fließrichtung des durchfließenden Mediums dem Zulaufstutzen folgend eine erste Regeleinrichtung, dann eine erste Durchflussreguliereinrichtung, dann eine zweite Durchflussreguliereinrichtung und abschließend der Ablaufstutzen folgt.

Die bekannte Armaturenkombination ist in der Herstellung aufwendig, weil in das Gehäuse die entsprechenden Komponenten eingebaut werden müssen, die vorgefertigt werden. Dies bedeutet nicht nur einen großen Fertigungsaufwand, sondern hat auch zur Konsequenz, dass das Gehäuse relativ groß ausgebildet sein muss. Auch ist nachteilig, dass die bisher bekannten Ausgestaltungen nicht in einfacher Weise mit handelsüblichen Thermostatventilen kombiniert werden können, die bisher millionenfach im Einsatz sind.

Um einen hydraulischen Abgleich in einem fluidführenden Heizungs- oder Kühlsystem durchzuführen, ist es vorteilhaft, ein Ventil mit integrierter Druckregeleinrichtung an den einzelnen Verbrauchern zu installieren. Da die Mehrzahl der Ventile in den vorhandenen Bestandsanlagen ohne eine solche integrierte Druckregeleinrichtung verbaut sind, ist bisher der komplette Ersatz eines solchen üblichen Ventiles durch ein Ventil mit integrierter Druckregeleinrichtung erforderlich.

Aus der DE 102 56 035 B3 und auch aus der WO 2009/135490 A2 sind Ventile mit integrierter Druckregelung zum Regeln eines durch das Ventil strömenden Fluidstromes bekannt. Hierbei kann ein Voreinstellquerschnitt mittels zweier gegeneinander beweglicher Teile verändert werden und so der Fluidstrom auf einen maximalen Wert begrenzt werden. Allerdings benötigt diese Art der Voreinstellung einen zusätzlichen Bauraum im Ventil. Bei vorhandenen, handelsüblichen Thermostatventilgehäusen, die ohne integrierte Druckregeleinrichtung aufgebaut sind, steht ein solcher zusätzlicher Einbauraum nicht zur Verfügung. Bei diesen Lösungen wird deshalb ein neues, auf die entsprechenden Bauteile abgestimmtes Gehäuse benötigt und installiert.

Aus der DE 10 2007 050 454 B4, insbesondere aus den Abbildungen gemäß Figur 3 und 4, sind Ausführungsformen von voreinstellbaren Durchflussregelventilen bekannt, bei denen die Druckregeleinrichtung als separates Bauteil unterhalb des Drosselkörpers und zugehörigem Sitz angeordnet ist. Auch hierbei wird ein zusätzlicher Bauraum benötigt. Ein Einbau in vorhandene, handelsübliche Thermostatventilgehäuse ohne integrierte Druckregeleinrichtung ist auch bei diesen Ausführungsformen nicht möglich. Es muss daher auch dann ein komplett neues, auf die Bauteile abgestimmtes Gehäuse verwendet werden.

Aus der DE 102 56 035 B3 und aus der WO 2009/135490 A2 sind zudem Ventile mit integrierter Druckregelung zum Regeln eines durch das Ventil strömenden Fluidstromes bekannt, bei denen die Sollwertfeder im Strömungskanal des Fluidstromes angeordnet ist. Des Weiteren ist auf der Spindel dieser Ventile eine Ventilfeder angeordnet. Bei diesen Lösungen wird ein jeweils neues, auf den speziellen Ventileinsatz abgestimmtes Gehäuse benötigt. Darüber hinaus ist bei diesen Lösungen die Sollwertfeder im Strömungskanal des Fluidstromes angeordnet, was einerseits den Querschnitt des Strömungskanals einengt und andererseits die Strömung im Strömungskanal durch die Ausbildung von Verwirbelungen beeinflusst, was sich insbesondere bei größeren Volumenströmen störend auswirkt.

Eine ähnliche Anordnung ist auch aus der DE 10 2007 050 454 B4 bekannt.

Ventile der eingangs beschriebenen Art sind aus der EP 0 911 714 A1 bekannt.

Ausgehend von diesem Stand der Technik liegt der Erfindung die Aufgabe zugrunde, ein kostengünstig zu fertigendes Durchflussregelventil mit integrierter Druckregelung zu schaffen, welches einfach aufgebaut ist, möglichst geringen Raum in Anspruch nimmt und welches die Möglichkeit bietet, vorhandene Thermostatventile mit einer entsprechenden Ausgestaltung des Durchflussregelventiles auszustatten, in dem die vorhandenen nicht-dynamischen Ventileinsätze durch ein erfindungsgemäßes Ventil ersetzt werden.

Zur Lösung dieser Aufgabe schlägt die Erfindung vor, dass der erste Drosselkörper den Sitz des zweiten Drosselkörpers bildet.

Gemäß dieser Ausgestaltung ist die Durchflussreguliereinheit sehr kompakt ausgebildet Und weist sämtliche notwendigen Bestandteile auf. Es handelt sich hiermit also um eine autarke Durchflussreguliereinheit, die in ein entsprechendes Gehäuse eingebaut werden kann.

Eine ganz besondere Ausgestaltung wird darin gesehen, dass sämtliche Teile, nämlich die Druckregeleinrichtung, die Ventilspindel mit erstem Drosselkörper, die Durchflussreguliereinheit mit erster Drosseleinrichtung und zweiter Drosseleinrichtung samt zweitem Drosselkörper und den zugehörigen Sitzen für die Drosselkörper, als Ventileinsatz zu einer Montageeinheit zusammengestellt sind, die in den Anschlussstutzen des Gehäuses als Einheit montierbar oder daraus demontierbar ist, wobei die Einzelteile unverlierbar miteinander verbunden sind.

Insbesondere hierdurch wird die Möglichkeit geschaffen, das Gehäuse mit einem solchen Ventileinsatz auszustatten, der sämtliche Elemente der Druckregelung und Durchflussregulierung beinhaltet. Dieser Ventileinsatz ist als eine Montageeinheit ausgeführt, die in ihrer Gesamtheit in das entsprechende Gehäuse montierbar ist oder daraus demontierbar ist. Hieraus ergibt sich auch die Möglichkeit, bestehende im Markt befindliche Thermostatventile mit nicht-dynamischen Ventileinsätzen nachträglich mit einem solchen dynamischen Ventileinsatz auszustatten, in dem der vorhandene Ventileinsatz gegen den erfindungsgemäßen Ventileinsatz ausgetauscht wird.

Bei der erfindungsgemäßen Ausgestaltung kann auf das aus dem Gehäuse herausragende Betätigungsteil der Ventilspindel ein am Gehäuse befestigbarer Stellantrieb angeordnet sein, mittels dessen die Einstellung der ersten Drosseleinrichtung erfolgt. Durch den Stellantrieb wird die Ventilspindel axial entgegen einer in dem Ventileinsatz oder Gehäuse vorgesehenen Feder aus einer maximalen Öffnungsstellung in eine teilweise oder vollständige Schließlage überführt.

Um auch eine einfache Einstellung der zweiten Drosseleinrichtung zu ermöglichen, ist vorgesehen, dass die Spindel vorzugsweise an ihrem aus dem Gehäuse oder dem Ventileinsatz vorragenden Endbereich eine drehfest an ihr angebrachte Handhabe zur Einstellung der zweiten Drosseleinrichtung aufweist, wobei der zweite Drosselkörper mit der Spindel über eine Gewindeverbindung gekoppelt ist und der zweite Drosselkörper an einem Bestandteil des Ventileinsatzes oder dem Sitz für den ersten Drosselkörper parallel zur Spindellängserstreckung verstellbar und unverdrehbar gehalten oder geführt ist.

Dabei ist bevorzugt vorgesehen, dass die Handhabe lösbar an der Spindel gehalten ist.

Auch kann bevorzugt sein, dass die Handhabe als Polygon ausgebildet ist und eine Eingriffskontur für einen Stellschlüssel bildet.

Um dem Benutzer die Position anzuzeigen, die er durch Einstellung tatsächlich eingestellt hat, ist bevorzugt vorgesehen, dass die Handhabe mit ersten Markierungen für die Einstellposition versehen ist und am Gehäuse oder am Ventileinsatz eine damit korrespondierende zweite Markierung angeordnet ist.

Eine bevorzugte Ausgestaltung der Druckregeleinrichtung wird darin gesehen, dass die Druckregeleinrichtung eine in einem Hohlraum des Ventileinsatzes eingespannt gehaltene Membran aufweist, deren dem Betätigungsteil der Spindel zugewandte Seite über einen in der Spindel ausgebildeten ersten Kanal mit dem Einlass in leitungsoffener Verbindung steht und deren der Durchflussreguliereinheit abgewandte Seite über einen zweiten Kanal zur Durchflussreguliereinheit in Verbindung steht.

Durch diese Ausgestaltung wird in einfacher Weise erreicht, dass die Druckdifferenz zwischen den Druckbereichen vor und hinter der Durchflussreguliereinheit konstant gehalten wird.

Ausführungsbeispiele der Erfindung sind in der Zeichnung dargestellt und im Folgenden näher beschrieben.

Es zeigt:
- Figur 1: ein erfindungsgemäßes Durchflussregelventil mit integrierter Druckregelung im Zusammenbau im Mittellängsschnitt gesehen, in zwei unterschiedlichen Einstellungen;
- Figur 2: den Ventileinsatz der Figur 1 ohne Gehäuse, ebenfalls in zwei unterschiedlichen Hubstellungen in Mittellängsschnitt gesehen;
- Figur 3: ein erfindungsgemäßes Durchflussregelventil mit integrierter Druckregelung im Zusammenbau im Mittelschnitt gesehen;
- Figur 4: einen erfindungsgemäßen Ventileinsatz mit großem Voreinstellwert ebenfalls im Mittellängsschnitt gesehen;
- Figur 5: den Schnitt A-A der Figur 4 mit drehfest auf dem Einstellring montiertem Handrad und einem daran ausgebildeten, mit einem Zeiger korrespondierenden Anschlag;
- Figur 6: zeigt den Ventileinsatz gemäß Figur4 mit kleinem Voreinstellwert ebenfalls im Mittellängsschnitt gesehen;
- Figur 7: zeigt eine Draufsicht auf den Ventileinsatz von oben gesehen;
- Figur 8: zeigt einen Ventileinsatz mit separatem Voreinstellelement und Anschlussgeometrien zum Befestigen eines Stellantriebes in einer Ansicht analog Figur 4 gesehen;
- Figur 9: ein erfindungsgemäßes Durchflussregelventil mit integrierter Druckregelung im Zusammenbau, im Mittellängsschnitt gesehen;
- Figur 10: einen erfindungsgemäßen Ventileinsatz mit separatem Voreinstellelement, ebenfalls im Mittellängsschnitt gesehen;
- Figur 11: eine Variante eines Ventileinsatzes mit separatem Voreinstellelement und Anschlussgeometrien zum Befestigen eines Stellantriebes, der auf die Spindel einwirken kann.

In der Zeichnung ist ein Durchflussregelventil 1 für flüssigkeitsführende Heizungs- oder Kühlanlagen gezeigt. Es besteht aus einem ein- oder mehrteiligen Gehäuse 2, welches im Ausführungsbeispiel einen Einlass 3 und einen Auslass 4 aufweist. Zwischen Einlass 3 und Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil aufweist. Auf das Gehäuse 2 ist ein Stellantrieb montierbar, wobei das Gehäuse eine Anschlussmöglichkeit 6 zum Anschließen eines solchen Stellantriebes aufweist. Der Stellantrieb wirkt auf das obere Ende der Spindel 7 ein und damit auf die Durchflussreguliereinheit 8 oder Teilen derselben. Damit wird der Strömungskanal durch das Ventil bzw. den später noch beschriebenen Ventileinsatz im Querschnitt verändert. Die Druckregeleinrichtung 14 umfasst die Spindel 7 koaxial und ist auf ihr axial beweglich angeordnet.

Die Spindel 7 trägt an ihrem unteren Ende als Bestandteil einer ersten Drosseleinrichtung einen ersten Drosselkörper 9, der den Durchfluss bestimmt. Insbesondere besteht die Durchflussreguliereinheit 8 aus einer ersten Drosseleinrichtung mit dem an der Spindel 7 befestigten ersten Drosselkörper 9 und einem diesem zuzuordnenden Sitz 10. Ferner besteht die Durchflussreguliereinheit 8 aus einer zweiten Drosseleinrichtung, die aus einem auf der Spindel 7 längs dieser verstellbar angeordneten zweiten Drosselkörper 11 und einem diesem zuzuordnenden Sitz gebildet ist. Der zweite Drosselkörper 11 ist in Richtung auf den ersten Drosselkörper 9 zu diesem hin und von diesem weg beweglich. Hierdurch ist der Querschnitt des Strömungskanales durch das Durchflussregelventil 1 veränderbar.

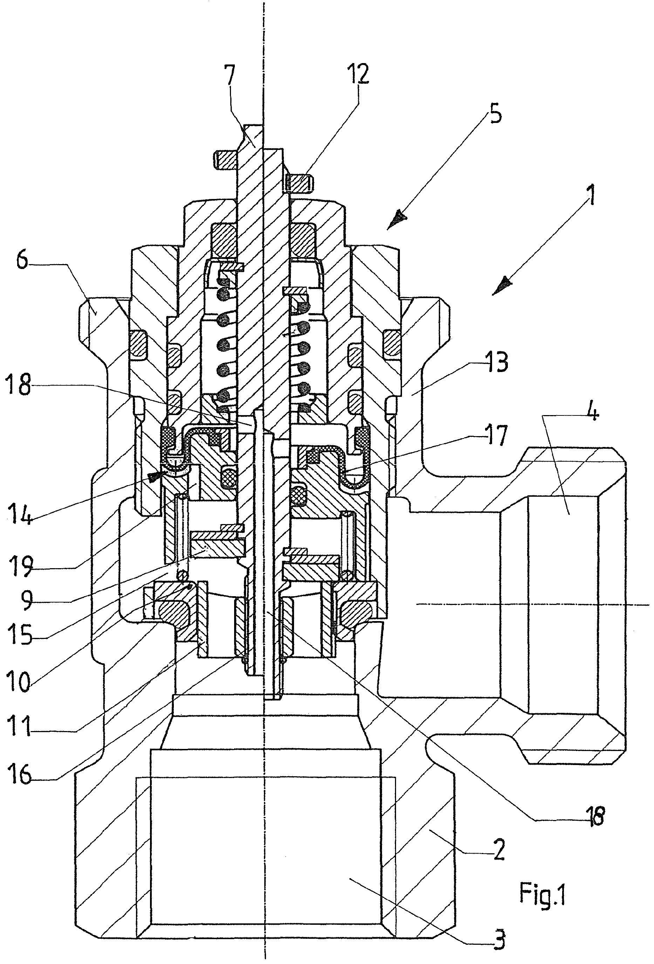

Insbesondere ist dabei auch vorgesehen, dass der erste Drosselkörper 9 gleichzeitig den Sitz für den zweiten Drosselkörper 11 bildet. Beispielsweise ist in der Figur 1 rechts eine Position gezeigt, in der die obere Randkante des zweiten Drosselkörpers 11 an der Unterseite des ersten Drosselkörpers 9 dichtend anliegend. In der Zeichnungsfigur links ist gezeigt, dass der zweite Drosselkörper 11 von dem ersten Drosselkörper 9 Abstand lässt, sodass ein Durchfluss über einen Spalt 15 zum Auslass 4 hin möglich ist.

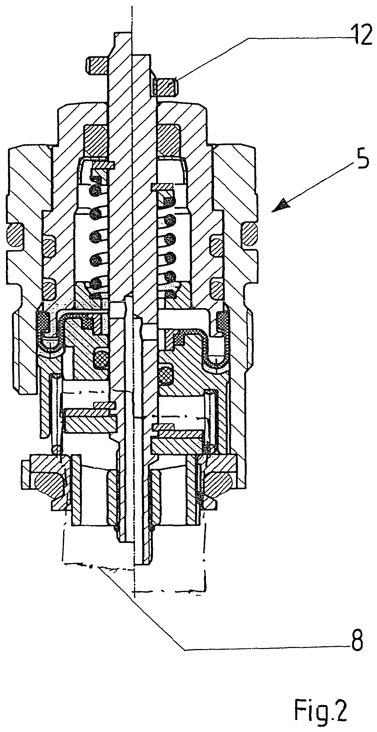

Wie insbesondere auch die Figur 2 zeigt, sind sämtliche Teile, nämlich die Druckregeleinrichtung 14, die Ventilspindel 7 mit ihrem ersten Drosselkörper 9, die Durchflussreguliereinheit 8 mit der ersten Drosseleinrichtung und der zweiten Drosseleinrichtung samt zweiten Drosselkörper 11 und den zugehörigen Sitzen für die Drosselkörper als Ventileinsatz 5 zu einer Montageeinheit zusammengefasst, die als solche komplett in den Anschlussstutzen 13 des Gehäuses 2 als komplette Einheit eingeschoben und montiert werden kann.

Die Einzelteile sind dabei miteinander unverlierbar verbunden. Diese Ausgestaltung ermöglicht es unter anderem auch, bei im Markt befindlichen Thermostatventilen mit nicht-dynamischen Ventileinsätzen einen Austausch vorzunehmen, in dem der vorhandene Ventileinsatz gegen den erfindungsgemäßen Ventileinsatz 5 ausgetauscht wird.

Die Spindel 7 weist an ihrem oben aus dem Gehäuse 2 bzw. dem Stutzen 13 bzw. dem Ventileinsatz 5 vorragenden Endbereich eine drehfest an ihr angebrachte Handhabe zur Einstellung der zweiten Drosseleinrichtung auf. Der zweite Drosselkörper 11 ist dazu mit der Spindel 7 über eine Gewindeverbindung 16 gekoppelt. Zusätzlich ist der zweite Drosselkörper 11 an einem Bestandteil des Ventileinsatzes 5 oder dem Sitz 10 für den ersten Drosselkörper 9 parallel zur Spindellängserstreckung verstellbar und unverdrehbar gehalten und geführt. Es ist somit möglich, durch Drehung der Spindel 7 mittels der Handhabe 12 den zweiten Drosselkörper 11 in Richtung der Spindellängserstreckung zu verstellen.

Vorzugsweise ist die Handhabe 12 lösbar an der Spindel 7 gehalten. Auch ist bevorzugt, dass die Handhabe 12 als Polygon ausgebildet ist und so eine Eingriffskontur für einen Stellschlüssel, beispielsweise einen Schraubenschlüssel bildet.

Zusätzlich ist vorgesehen, dass die Handhabe 12 mit ersten Markierungen für die Einstellposition versehen ist und am Gehäuse 2 oder vorzugsweise am Ventileinsatz 5 eine damit korrespondierende zweite Markierung vorgesehen ist. Damit ist es für den Benutzer in einfacher Weise möglich, die Voreinstellwerte genau einzustellen und abzulesen.

Die Druckregeleinrichtung 14 ist in an sich bekannter Weise ausgestaltet. Hierzu ist in einem Hohlraum des Ventileinsatzes 5 eine Membran 17 eingespannt gehalten, deren dem Betätigungsteil der Spindel 7 (in der Zeichnung oben) zugewandte Seite über einen in der Spindel 7 ausgebildeten ersten Kanal 18 mit dem Einlass 3 in leitungsoffener Verbindung steht. Deren der Durchflussreguliereinrichtung 8 zugewandte Seite steht über einen zweiten Kanal 19, der zur Durchflussreguliereinheit 8 hin offen ist, in Verbindung. In dieser Weise ist die Druckregelung in einfacher Weise in die Ausgestaltung des Ventileinsatzes 5 integriert.

Die Erfindung stellt ein Durchflussregelventil 1 zur Verfügung, welches durch den Ventileinsatz 5 mit allen funktionellen Bestandteilen die Möglichkeit schafft, solche Teile bei kleinen Abmessungen kostengünstig herzustellen. Insbesondere sind solche Ventileinsätze 5 auch gegen herkömmliche Ventileinsätze in üblichen Thermostatventilen austauschbar.

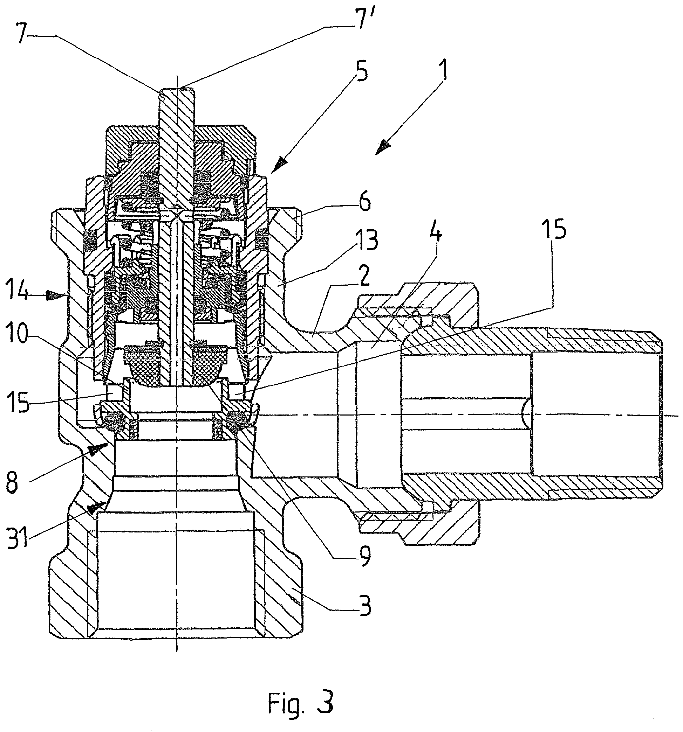

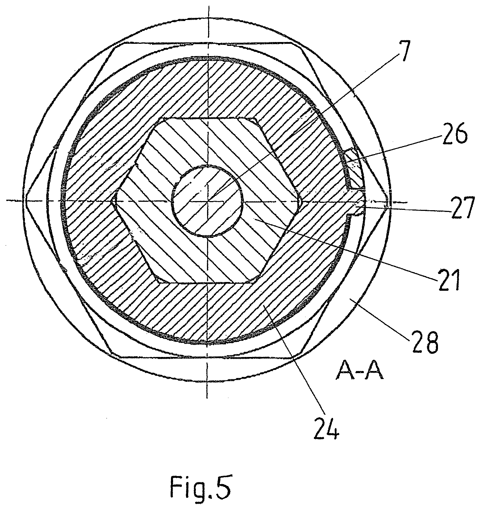

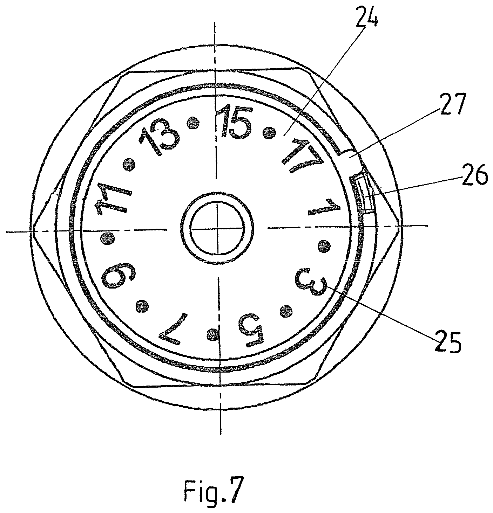

In der Zeichnung, insbesondere in den Figuren 3 bis 8, ist ein Durchflussregelventil 1 für flüssigkeitsführende Heizungs- oder Kühlanlagen gezeigt. Es besteht im Wesentlichen aus einem ein- oder mehrteiligen Gehäuse 2, welches einen Einlass 3 und einen Auslass 4 aufweist. Zwischen dem Einlass 3 und dem Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil 7'aufweist. Auf das Gehäuse 2 ist ein Stellantrieb montierbar, wobei das Gehäuse 2 eine Anschlussmöglichkeit 6 zum Anschließen eines solchen Stellantriebes aufweist. Der Stellantrieb wirkt auf das obere Ende 7'der Spindel 7 ein und damit auf die Durchflussreguliereinheit 8 oder Teile derselben. Damit wird der Strömungskanal durch das Ventil beziehungsweise den später noch beschriebenen Ventileinsatz im Querschnitt verändert.

Die Spindel trägt an ihrem unteren Ende einen ersten Drosselkörper 9, durch den der Durchfluss bestimmt wird. Die Durchflussreguliereinheit 8 besteht somit aus einer Drosseleinrichtung mit dem an der Spindel 7 befestigten Drosselkörper 9 und einem diesen zugeordneten Sitz 10. Der Drosselkörper 9 bildet mit dem Sitz 10 einen Abstandsspalt 15, der zum Auslass 4 hin offen ist, so dass ein entsprechender Durchfluss durch das Ventil möglich ist.

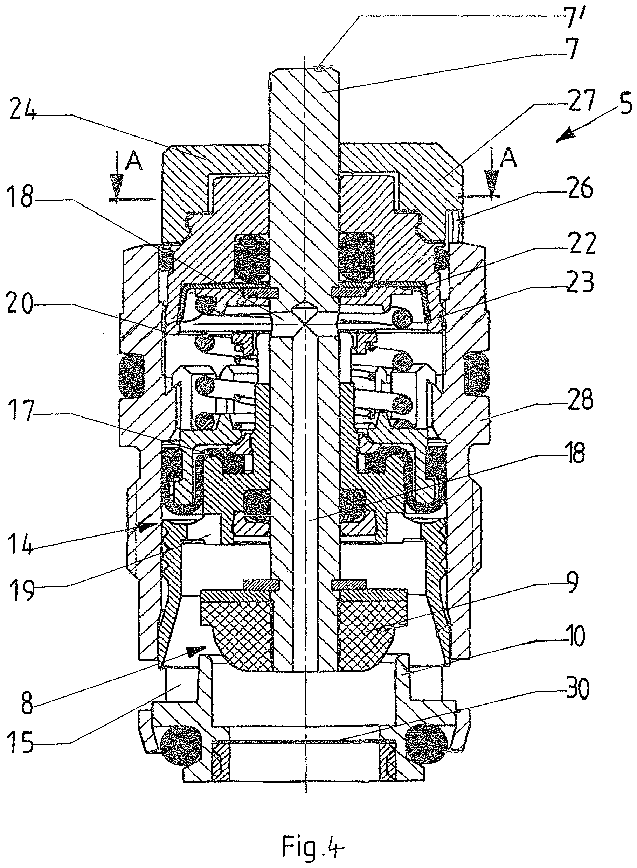

Wie insbesondere die Figuren 4,6 und 8 zeigen, sind sämtliche Teile, nämlich die Druckregeleinrichtung 14, die Spindel 7 mit dem Drosselkörper 9 und die Durchflussreguliereinheit 8 mit dem Sitz 10 als Ventileinsatz 5 zu einer Montageeinheit zusammengefasst, die als solche komplett in den Anschlussstutzen 13 des Gehäuses 2 als komplette Einheit eingeschoben und montiert werden kann. Die Einzelteile sind dabei miteinander unverlierbar verbunden. Diese Ausgestaltung ermöglicht es unter anderem, bei im Markt befindlichen Thermostatventilen mit nicht-dynamischen Ventileinsätzen einen Austausch vorzunehmen, in dem der vorhandene Ventileinsatz gegen den erfindungsgemäßen Ventileinsatz getauscht wird. In diesen Ventileinsatz 5 integriert ist zudem die Voreinstellung der Durchflussreguliereinheit 8, die mittels einstellbarer Hubbegrenzungmittel des Drosselkörpers 9 vorgenommen werden kann.

Die Druckregeleinrichtung 14 ist in an sich bekannter Weise ausgestaltet. Dabei ist in einem Hohlraum des Ventileinsatzes 5 eine Membran 17 eingespannt gehalten, deren dem Betätigungsteil der Spindel 7 (in der Zeichnung oben) zugewandte Seite über einen in der Spindel 7 ausgebildeten ersten Kanal 18 mit dem Einlass 3 in leitungsoffener Verbindung steht. Deren der Durchflussreguliereinrichtung 8 zugewandte Seite steht über einen zweiten Kanal 19, der zur Durchflussreguliereinheit 8 hin offen ist, in Verbindung. Somit ist in einfacher Weise die Druckregelung in die Ausgestaltung des Ventileinsatzes 5 integriert.

Der Ventileinsatz 5 weist besonders kompakte Außenabmessungen und damit eine möglichst geringe Eintauchtiefe in das Gehäuse 2 des Thermostatventiles auf, so dass die Rohranschlussgeometrien 13 des Gehäuses 2 nicht durch den Ventileinsatz 5 verdeckt werden, wenn der Ventileinsatz 5 als Einheit in das Gehäuse montiert oder daraus demontiert wird.

Durch die Hubbegrenzung des Drosselkörpers 9 wird eine Voreinstellung der Durchflussreguliereinheit 8 erreicht, so dass der Fluidstrom auf einen maximalen Wert begrenzt werden kann, der mit der eingestellten Hubhöhe des Drosselkörpers 9 korrespondiert.

Die Druckregeleinrichtung 14 umgreift die mit dem Drosselkörper 9 gekoppelte Spindel koaxial und ist auf dieser axial beweglich angeordnet, so dass wiederum eine kompakte montierbare Einheit besteht.

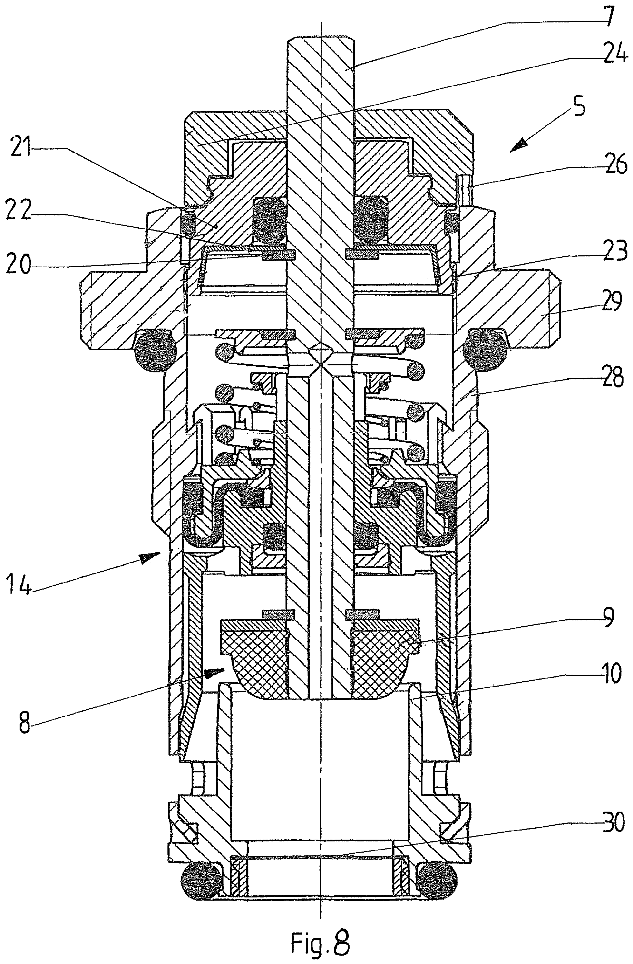

Zum Zwecke der Hubbegrenzung weist die Spindel 7 mindestens einen radial vorstehenden Kragen 20 oder Absatz auf, der mit einem an einem axial beweglichen Einstellring 21 angebrachten Anschlag 22 zur Anlage gelangen kann. Der axial bewegliche Einstellring 21 umgreift die Spindel 7 koaxial. Zusätzlich ist im Ausführungsbeispiel der Einstellring 21 mit einem Gewinde 23 versehen, welches die Drehbewegung in eine Hubbewegung umwandelt. Des Weiteren ist der Einstellring 21 mit einem daran drehfest gekoppelten Handrad 24 versehen. Dieses Handrad 24 weist eine Skala 25 zum Ablesen der Voreinstellwerte auf, die mit einem am Ventileinsatz 5 angebrachten Zeiger 26 korrespondiert. Die Drehbewegung des Handrades 24 wird durch einen an dem Handrad 24 ausgebildeten und mit dem Zeiger 26 korrespondierenden Anschlag 27 begrenzt. Zusätzlich kann das Ventileinsatzgehäuse 28, wie in Figur 8 gezeigt ist, mit einer Anschlussgeometrie 29 für das Befestigen von Stellgliedern versehen sein, welche auf das Betätigungsteil 7' der Spindel 7 einwirken.

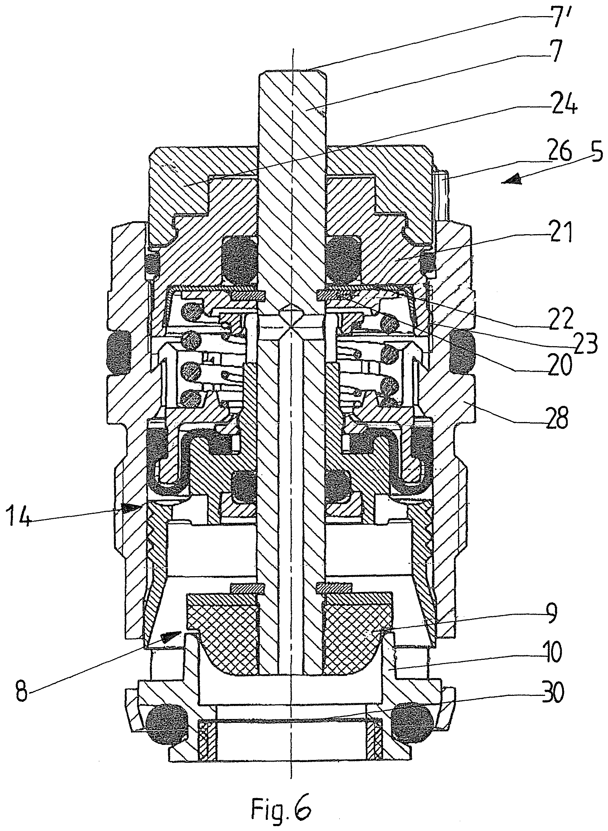

Zum Zwecke der Hubbegrenzung können die entsprechenden Elemente eingestellt werden, wie dies in den Zeichnungsfiguren ersichtlich ist, beispielsweise in eine Position gemäß Figur 4, die einen großen Voreinstellwert und somit einen großen Hub des Drosselkörpers 9 definiert oder aber, wie in Figur 6 gezeigt, kann die Hubbegrenzung entsprechend eingestellt werden, um einen kleinen Voreinstellwert zu bilden. Auch kann, wie in Figur 8 gezeigt ist, der Ventileinsatz 5 mit separatem Voreinstellelement und Anschlussgeometrien 29 zum Befestigen eines Stellantriebes ausgebildet sein.

Zusätzlich ist zur Vermeidung von Verschmutzungen, die die Funktion des Ventileinsatzes 5 beeinträchtigen könnten, vorgesehen, dass unterhalb des Ventilsitzes 10 des Ventileinsatzes 5 ein Filtersieb 30 vorgesehen ist, welches gegebenenfalls lösbar befestigt, also auswechselbar angeordnet ist.

Insbesondere durch die Ausbildung der Hubbegrenzungsmittel für den Hub des Drosselkörpers wird eine besonders kompakte Bauform des Ventileinsatzes 5 gefördert, so dass ein solcher Ventileinsatz 5 gegen herkömmliche Ventileinsätze in üblichen Thermostatventilen ausgetauscht werden kann.

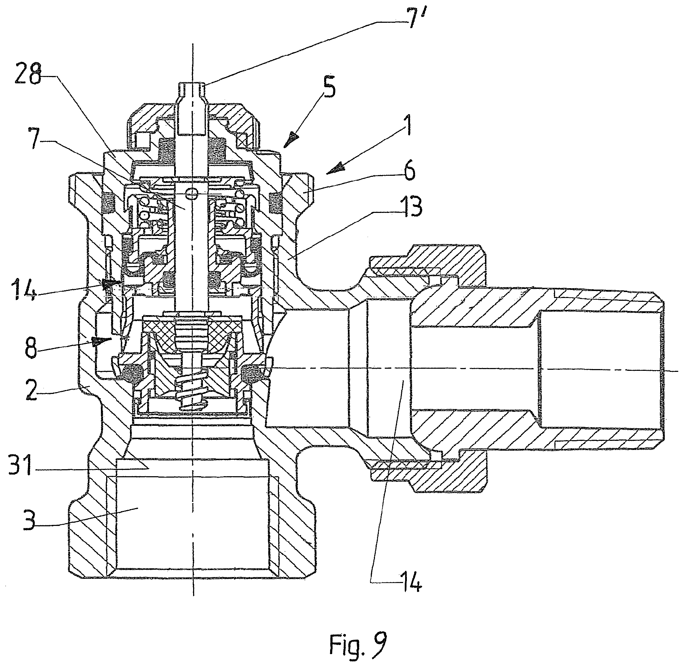

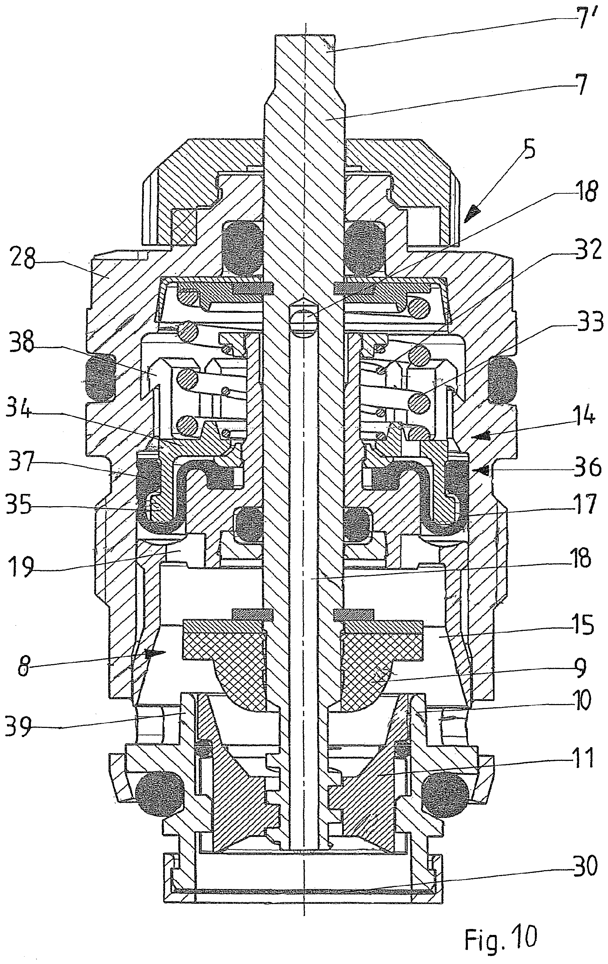

In der Zeichnung (Fig. 9 bis 11) ist ein Durchflussregelventil 1 für flüssigkeitsführende Heizungs- oder Kühlanlagen gezeigt. Es besteht aus einem ein- oder mehrteiligen Gehäuse 2, welches im Ausführungsbeispiel einen Einlass 3 und einen Auslass 4 aufweist. Zwischen Einlass 3 und Auslass 4 ist ein Anschlussstutzen 13 vorgesehen, in den eine Druckregeleinrichtung 14 eingebaut ist, welche die Druckdifferenz zwischen den Druckbereichen vor und hinter einer im Gehäuse 2 angeordneten Durchflussreguliereinheit 8 konstant hält. Des Weiteren ist eine Spindel 7 nach Art einer Ventilspindel angeordnet, die ein aus dem Gehäuse 2 nach oben abragendes Betätigungsteil 7' aufweist. Auf das Gehäuse 2 ist beispielsweise ein Stellantrieb montierbar, wobei das Gehäuse 2 ein Anschlussmöglichkeit 6 zum Anschließen eines solchen Stellantriebes aufweist. Ein solcher Stellantrieb wirkt auf das obere Ende der Spindel 7 ein und damit auf die Durchflussreguliereinheit 8 oder Teile derselben. Damit wird der Strömungskanal durch das Ventil beziehungsweise den später noch beschriebenen Ventileinsatz im Querschnitt verändert.

Die Spindel 7 trägt an ihrem unteren Ende als Bestandteil einer ersten Drosseleinrichtung einen ersten Drosselkörper 9, der den Durchfluss bestimmt. Insbesondere besteht die Durchflussreguliereinheit 8 aus einer ersten Drosseleinrichtung mit dem an der Spindel 7 befestigten ersten Drosselkörper 9 und einem diesen zuzuordnenden Sitz 10. Ferner besteht die Durchflussreguliereinrichtung aus einer zweiten Drosseleinrichtung, die aus einem in einem Kragen 39 axial verstellbar angeordneten zweiten Drosselkörper 11 besteht, der dem Drosselkörper 9 zugeordnet ist. Je nach Einstellung des zweiten Drosselkörpers 11 relativ zum ersten Drosselkörper 9 ist der Querschnitt des Strömungsspaltes 15 veränderbar.

Sämtliche Teile, nämlich die Druckregeleinrichtung 14, die Ventilspindel 7 mit ihrem Drosselkörper 9, die Durchflussreguliereinheit 8 mit der ersten Drosseleinrichtung und der zweiten Drosseleinrichtung samt zweiten Drosselkörper 11 und den zugehörigen Sitzen für die Drosselkörper als Ventileinheit 5 zu einer Montageeinheit zusammengefasst, die als solche komplett in den Anschlussstutzen 13 des Gehäuses 2 als Einheit eingeschoben und montiert werden kann oder auch demontiert werden kann. Die Einzelteile sind dabei miteinander unverlierbar verbunden. Diese Ausgestaltung ermöglicht es unter anderem auch, bei im Markt befindlichen Thermostatventilen mit nicht-dynamischen Ventileinsätzen einen Austausch vorzunehmen, indem der vorhandene Ventileinsatz gegen den Erfindungs- Ventileinsatz 5 ausgetauscht wird.

Die in den Ventileinsatz 5 integrierte Druckregeleinrichtung 14 ist in an sich bekannter Weise ausgestaltet. Hierzu ist in einem Hohlraum des Ventileinsatzes 5 eine Membran 17 eingespannt gehalten, deren den Betätigungsteil der Spindel 7 (in der Zeichnung oben) zugewandten Seite über einen in der Spindel 7 ausgebildeten ersten Kanal 18 mit dem Einlass 3 in leitungsoffener Verbindung steht. Deren der Durchflussreguliereinrichtung 8 zugewandten Seite steht über einen zweiten Kanal 19, der zur Durchflussreguliereinheit 8 hin offen ist, in Verbindung. In dieser Weise ist die Druckregelung in einfacher Weise in die Ausgestaltung des Ventileinsatzes 5 integriert.

Des Weiteren ist eine Sollwertfeder 32 der Druckreguliereinrichtung 14 auf der dem Strömungskanal oder Spalt 15 abgewandten Seite der Membran 17 und der dem Betätigungsteil 7' der Spindel 7 zugewandten Seite angeordnet. Des Weiteren ist eine Ventilfeder 33 angeordnet, die die Sollwertfeder 32 koaxial umfasst. Auf diese Weise ist der Einbauraum für beide Federn klein gehalten, so dass die kompakte Bauform des Ventileinsatzes 5 erreicht wird und erreicht wird, dass dieser in vorhandene Ventilgehäuse oben angegebener Art eingebaut werden kann.

Insbesondere ist so die Druckregeleinrichtung 14 und die Durchflussregeleinrichtung 8 samt Ventilfeder 33 und Sollwertfeder 32 als Bestandteil des Ventileinsatzes 5 zu einer Montageeinheit unverlierbar miteinander verbunden, so dass der Ventileinsatz 5 als komplette Einbaueinheit in das Gehäuse 2 montierbar oder daraus montierbar ist.

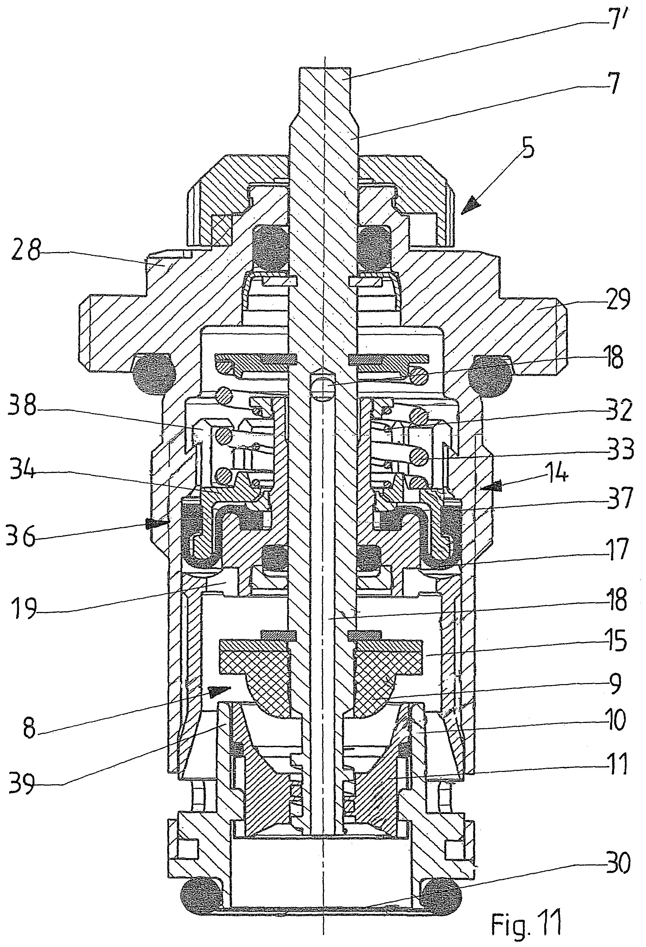

Im Ausführungsbeispiel stützen sich sowohl die Sollwertfeder 32 als auch die Ventilfeder 33 auf einem gemeinsamen in dem Ventileinsatz 5 befindlichen Halteelement 34 ab, was für die kompakte Bauform förderlich ist. Dieses Halteelement 34 bildet außerdem eine die Membran 17 stützende Kontur 35 aus, die einen Einbauraum 36 für den äußeren Dichtwulst 37 der Membrane 17 bildet. Das Halteelement 34 ist durch eine kraft- oder formschlüssige Verbindung 38 mit dem Ventileinsatzgehäuse 28 verbunden. Im Ausführungsbeispiel gemäß Figur 11 weist der Ventileinsatz 5 beziehungsweise das Ventileinsatzgehäuse 28 eine Anschlussgeometrie 29 für das Befestigen von Stellgliedern auf, welche auf dem Betätigungsteil 7' der Ventilspindel 7 einwirken können.

Zusätzlich weist der Sitz 10 des Ventileinsatzes 5 einen Kragen 39 auf. In diesem Kragen ist unterhalb des ersten Drosselkörpers 9 ein voreinstellbarer zweiter Drosselkörper 11 angeordnet. Dieser ist geeigneter Weise axial verstellbar, beispielsweise durch Drehung der mit dem Drosselkörper 11 gekoppelten Spindel 7.

Zusätzlich ist der Sitz 10 des Ventileinsatzes 5 auf seiner Unterseite mit einem Filtersieb 30 ausgestattet, welches vorzugsweise auswechselbar angeordnet ist.

Die Erfindung ist nicht auf die Ausführungsbeispiele beschränkt, sondern im Rahmen der Offenbarung vielfach variabel.

Alle in der Beschreibung und/oder Zeichnung offenbarten Einzel- und Kombinationsmerkmale werden als erfindungswesentlich angesehen.

### Bezugszeichenliste:

- 1: Durchflussregelventil
- 2: Gehäuse
- 3: Einlass
- 4: Auslass
- 5: Ventileinsatz
- 6: Anschlussmöglichkeit (für Stellantrieb)
- 7: Spindel
- 7': Spindelende
- 8: Durchflussreguliereinheit
- 9: erster Drosselkörper
- 10: Sitz für 9
- 11: zweiter Drosselkörper
- 12: Handhabe
- 13: Anschlussstutzen
- 14: Druckregeleinrichtung
- 15: Spalt
- 16: Gewindeverbindung
- 17: Membran
- 18: erster Kanal
- 19: zweiter Kanal
- 20: Kragen
- 21: Einstellring
- 22: Anschlag
- 23: Gewinde
- 24: Handrad
- 25: Skala
- 26: Zeiger
- 27: Anschlag für 26
- 28: Ventileinsatzgehäuse
- 29: Anschlussgeometrie
- 30: Filtersieb
- 31: Rohranschlussgeometrie
- 32: Sollwertfeld
- 33: Ventilfeder
- 34: Halteelement
- 35: Kontur

## Patentansprüche

1. Durchflussregelventil (1) für flüssigkeitsführende Heizungs- oder Kühlanlagen, bestehend aus einem Gehäuse (2) mit mindestens einem Einlass (3) und mindestens einem Auslass (4) und einem dazwischen angeordneten Anschlussstutzen (13), in den eine Druckregeleinrichtung (14), welche die Druckdifferenz zwischen den Druckbereichen vor und hinter einer im Anschlussstutzen angeordneten Durchflussreguliereinheit (8) konstant hält, sowie eine Spindel (7) mit aus dem Gehäuse (2) ragendem Betätigungsteil und im Gehäuse (2) befindlichen ersten Drosselkörper (9) eingesetzt ist, der auf die Durchflussreguliereinheit oder auf Teile davon einwirkt, wobei die Durchflussreguliereinheit (8) aus einer ersten Drosseleinrichtung, die aus dem an der Spindel (7) befestigten ersten Drosselkörper (9) und einem Sitz (10) gebildet ist, und einer zweiten Drosseleinrichtung, die aus einem auf der Spindel (7) längs dieser verstellbar angeordneten zweiten Drosselkörper (11) und einem Sitz gebildet ist, besteht, wobei der zweite Drosselkörper (11) in Richtung auf den ersten Drosselkörper (9) und von diesem weg beweglich ist, wodurch der Querschnitt des Strömungskanals durch das Durchflussregelventil (1) veränderbar ist, **dadurch gekennzeichnet, dass** der erste Drosselkörper (9) den Sitz des zweiten Drosselkörpers (11) bildet.

2. Durchflussregelventil nach Anspruch 1, **dadurch gekennzeichnet, dass** sämtliche Teile, nämlich die Druckregeleinrichtung (14), die Ventilspindel (7) mit erstem Drosselkörper (9), die Durchflussreguliereinheit (8) mit erster Drosseleinrichtung und zweiter Drosseleinrichtung samt zweitem Drosselkörper (11) und den zugehörigen Sitzen für die Drosselkörper (9,11), als Ventileinsatz (5) zu einer Montageeinheit zusammengestellt sind, die in den Anschlussstutzen (13) des Gehäuses (2) als Einheit montierbar oder daraus demontierbar ist, wobei die Einzelteile unverlierbar miteinander verbunden sind.

3. Durchflussregelventil nach einem der Ansprüche 1 oder 2, **dadurch gekennzeichnet, dass** die Spindel (7) vorzugsweise an ihrem aus dem Gehäuse (2) oder dem Ventileinsatz (5) vorragenden Endbereich eine drehfest an ihr angebrachte Handhabe (12) zur Einstellung der zweiten Drosseleinrichtung aufweist, wobei der zweite Drosselkörper (11) mit der Spindel (7) über eine Gewindeverbindung (16) gekoppelt ist und der zweite Drosselkörper (11) an einem Bestandteil des Ventileinsatzes (5) oder dem Sitz (10) für den ersten Drosselkörper (9) parallel zur Spindellängserstreckung verstellbar und unverdrehbar gehalten oder geführt ist.

4. Durchflussregelventil nach Anspruch 3, **dadurch gekennzeichnet, dass** die Handhabe (12) lösbar an der Spindel (7) gehalten ist.

5. Durchflussregelventil nach einem der Ansprüche 3 oder 4, **dadurch gekennzeichnet, dass** die Handhabe (12) als Polygon ausgebildet ist und eine Eingriffskontur für einen Stellschlüssel bildet.

6. Durchflussregelventil nach einem der Ansprüche 3 bis 5, **dadurch gekennzeichnet, das**s die Handhabe (12) mit ersten Markierungen für die Einstellposition versehen ist und am Gehäuse (2) oder am Ventileinsatz (5) eine damit korrespondierende zweite Markierung angeordnet ist.

7. Durchflussregelventil nach einem der Ansprüche 1 bis 6, **dadurch gekennzeichnet, das**s die Druckregeleinrichtung (14) eine in einem Hohlraum des Ventileinsatzes (5) eingespannt gehaltene Membran (17) aufweist, deren dem Betätigungsteil der Spindel (7) zugewandte Seite über einen in der Spindel (7) ausgebildeten ersten Kanal (18) mit dem Einlass (3) in leitungsoffener Verbindung steht und deren der Durchflussreguliereinheit (8) abgewandte Seite über einen zweiten Kanal (19) zur Durchflussreguliereinheit (8) in Verbindung steht.

## Claims

1. A flow regulation valve (1) for liquid-conveying heating or cooling systems, consisting of a housing (2) with at least one inlet (3) and at least one outlet (4) and a connecting port (13) arranged therebetween, in which are provided a pressure regulator device (14) keeping constant the pressure difference between the pressure zones before and behind a pressure regulator unit (8) arranged in the connecting port, and a spindle (7) with an actuating portion protruding from the housing (2) and a first throttle body (9) located in the housing (2), said first throttle body (9) acting on the pressure regulator unit or on parts thereof, the pressure regulator unit (8) being formed of a first throttle device composed of the first throttle body (9) attached at the spindle (7) and a seat (10), and a second throttle device formed of a second throttle body (11) adjustably arranged on the spindle (7) and a seat, the second throttle body (11) being displaceable in the direction towards the first throttle body (9) and away therefom, thereby the cross-section of the flow channel through the flow regulation valve (1) being variable, **characterized by** that the first throttle body (9) forms the seat of the second throttle body (11).

2. The flow regulation valve according to claim 1, **characterized by** that all parts, namely the pressure regulator device (14), the valve spindle (7) with first throttle body (9), the pressure regulator unit (8) with first throttle device and second throttle device together with second throttle body (11) and the respective seats for the throttle bodies (9, 11), are assembled as a valve insert (5) so to form an assembly that can be mounted in the connecting port (13) of the housing (2) as a unit or can be dismounted therefrom, the individual components being held captive with respect to each other.

3. The flow regulation valve according to one of claims 1 or 2, **characterized by** that the spindle (7) preferably includes, at its end portion protruding from the housing (2) or the valve insert (5), a handle (12) locked in rotation thereat for adjusting the second throttle device, the second throttle body (11) being coupled to the spindle (7) by a threaded connection (16), and the second throttle body (11) being held or guided, at a portion of the valve insert (5) or the seat (10) for the first throttle body (9), in a manner displaceable in parallel to the longitudinal extension of the spindle and non-rotatable.

4. The flow regulation valve according to claim 3, **characterized by** that the handle (12) is detachably held at the spindle (7).

5. The flow regulation valve according to one of claims 3 or 4, **characterized by** that the handle (12) is configured as a polygon, and forms an engagement contour for an adjustment key.

6. The flow regulation valve according to one of claims 3 to 5, **characterized by** that the handle (12) is provided with first markings for the adjustment position, and a corresponding second marking is provided at the housing (2) or at the valve insert (5).

7. The flow regulation valve according to one of claims 1 to 6, **characterized by** that the pressure regulator device (14) includes a membrane (17) held clamped in a cavity of the valve insert (5), the side of said membrane showing toward the actuating portion of the spindle (7) being in an open connection with the inlet (3) via a first channel (18) formed in the spindle (7), and the side of said membrane showing away from the pressure regulator unit (8) being in connection with the pressure regulator unit (8) via a second channel (19).

## Revendications

1. Vanne de régulation du débit de fluide (1) pour systèmes de chauffage ou de réfrigération de transfert de liquide, consistant en un boîtier (2) avec au moins une entrée (3) et au moins une sortie (4) et un embout de raccordement (13) arrangé entre elles, dans lequel sont prévus un dispositif de réglage de pression (14) maintenant constante la différence de pression entre les zones de pression devant et derrière une unité de réglage de pression (8) arrangée dans l'embout de raccordement, et une broche (7) avec une partie de commande en saillie du boîtier (2) et un premier étrangleur (9) se trouvant dans le boîtier (2), ce premier étrangleur (9) agissant sur l'unité de réglage de pression ou sur des parties de celle-ci, l'unité de réglage de pression (8) étant formée d'un premier dispositif de restriction constitué du premier étrangleur (9) attaché à la broche (7) et un siège (10), et un deuxième dispositif de restriction réalisé par un deuxième étrangleur (11) arrangé de façon réglable sur la broche (7) et un siège, le deuxième étrangleur (11) étant déplaçable dans la direction vers le premier étrangleur (9) et loin de celui-ci, donc la section en coupe du canal d'écoulement à travers la vanne de régulation du débit (1) étant variable, **caractérisée en ce que** le premier étrangleur (9) forme le siège du deuxième étrangleur (11).

2. Vanne de régulation du débit de fluide selon la revendication 1, **caractérisée en ce que** tous les composants, c'est-à-dire le dispositif de réglage de pression (14), la broche (7) de la vanne avec le premier étrangleur (9), l'unité de réglage de pression (8) avec le premier dispositif de restriction et deuxième dispositif de restriction et ensemble avec le deuxième étrangleur (11) et les sièges respectifs pour l'étrangleur (9, 11), sont combinés comme insert de vanne (5) pour réaliser un ensemble de montage qui peut être monté dans l'embout de raccordement (13) du boîtier (2) comme une unité ou peut être démonté hors de celle-ci, les composants individuels étant maintenus solidaire entre eux.

3. Vanne de régulation du débit de fluide selon une des revendications 1 ou 2, **caractérisée en ce que** la broche (7) de préférence comporte, à sa partie d'extrémité en saillie du boîtier (2) ou de l'insert de vanne (5), une manette de commande (12) liée en rotation pour régler le deuxième dispositif de restriction, le deuxième étrangleur (11) étant accouplé à la broche (7) par un joint fileté (16), et le deuxième étrangleur (11) étant maintenu ou guidé, à une partie de l'insert de vanne (5) ou le siège (10) pour le premier étrangleur (9) de façon déplaçable, en parallèle à l'étendue longitudinale de la broche, et non rotative.

4. Vanne de régulation du débit de fluide selon la revendication 3, **caractérisée en ce que** la manette de commande (12) est maintenue de façon amovible à la broche (7).

5. Vanne de régulation du débit de fluide selon une des revendications 3 ou 4, **caractérisée en ce que** la manette de commande (12) est réalisée en forme de polygone et forme un contour d'engagement pour une clé de réglage.

6. Vanne de régulation du débit de fluide selon une des revendications 3 à 5, **caractérisée en ce que** la manette de commande (12) est pourvue de premières marques pour la position de réglage, et une deuxième marque correspondante est arrangée au boîtier (2) ou à l'insert de vanne (5).

7. Vanne de régulation du débit de fluide selon une des revendications 1 à 6, **caractérisée en ce que** le dispositif de réglage de pression (14) comporte une membrane (17) maintenue contrainte dans une cavité de l'insert de vanne (5), le côté de la membrane en vis-à-vis de la partie de commande de la broche (7) étant en communication ouverte avec l'entrée (3) par l'intermédiaire d'un premier canal (18) réalisé dans la broche (7) et l'autre côté de la membrane loin de l'unité de réglage de pression (8) étant en communication avec l'unité de réglage de pression (8) par l'intermédiaire d'un deuxième canal (19).
